# EUROPEAN PATENT SPECIFICATION

(11) **EP 0 872 922 B1**
(45) Date of publication and mention of the grant of the patent: **01.08.2007**
(21) Application number: 98201164.5
(22) Date of filing: 16.04.1998
(51) Int. Cl.: H01R 25/14, H01R 13/11, H02B 1/052, H02B 1/20

(54) **Electric power distribution device**
Elektronische Energieverteilungsvorrichtung
Dispositif de distribution d'énergie

(30) Priority: 18.04.1997 IT MI970923
(43) Date of publication of application: 21.10.1998
(73) Proprietor: ABB Sace S.p.A., 20124 Milano (IT)
(72) Inventor: Fontana, Rodolfo, 21060 Clivio (Va) (IT)
(74) Representative: Giavarini, Francesco

(56) References cited:
- EP-A- 0 109 881
- EP-A- 0 372 768
- EP-A- 0 472 409
- EP-A- 0 748 013
- DE-C- 19 524 123
- FR-A- 2 564 256
- US-A- 4 087 668

## Description

The present invention relates to an electric power distribution device which is present in components such as electrical panels and distribution boards, comprising conductors whereto pieces of equipment can be electrically connected.

An electric power distribution device according to the preamble of claim 1 is known from EP-0.472 492.

Electric power distribution devices for electrically connecting a plurality of pieces of equipment, such as for example line protection breakers, to a single power supply point, such as for example a contactor, are known.

Said devices comprise laminae or bars made of conducting material which are connected to the various electrical phases of the power supply system and have components for the connection of the pieces of electrical equipment.

In conventional devices, the use of conducting laminae for the electrical connection of pieces of equipment allows to eliminate the many conducting wires that connect, along long and convoluted paths, the pieces of electrical equipment to a master switch or to a contactor.

Currently, in order to provide modular electrical connection of the pieces of equipment, the conducting laminae are longitudinally provided with lamina-type protruding contacts which are equidistant. These lamina-type contacts are inserted in suitable electrical connection seats provided in the pieces of equipment.

The conducting laminae are rigidly coupled to an insulating support fixed to rails or bars for the coupling and support of the pieces of electrical equipment.

The pieces of electrical equipment can thus be connected to the rails only at the lamina-type contacts and therefore at preset distances or spacings of the rail.

This solution is rigidly modular and scarcely flexible, since it is necessary to observe a preset spacing for the connection of the pieces of electrical equipment. For example, if it is necessary to replace one of the pieces of equipment, the new piece of equipment does not always have the volume and electrical connection spacings left free by the previous piece of equipment. It is thus necessary to redistribute the pieces of equipment that are present in the electrical panel or distribution board.

The arrangement of the conducting laminae with respect to the fixing and supporting rail affects the possibility to connect pieces of equipment, since it is necessary to insert the lamina-type contacts in the electrical connection seats of the pieces of equipment when they are supported by the rails.

Accordingly, accurate executions and adjustments are required during the installation of the conducting laminae in the panel or distribution board.

Moreover, in panels it is often necessary to accommodate side by side switches with different polarities and different voltages. In this case it is necessary to provide a system of conducting laminae having different polarities or voltages and is equipped with lamina-type contacts having a complex shape. The contacts must be provided so as to start from a parallel arrangement of the bars having different phase or polarity and voltage and arrive, in alignment and with precise spacings, adjacent to the rails so that they can be accommodated in the electrical connection seats of the pieces of equipment.

Moreover, lamina-type contacts are dangerous. In current solutions, when one of the pieces of electrical equipment is extracted, the lamina contacts are directly accessible.

The aim of the present invention is to obviate the drawbacks of the prior art and to provide an electric power distribution device which is highly adaptable to the arrangement of the pieces of equipment, allows very quick electrical connection, has a limited bulk and is highly safe.

This aim is achieved by an electric power distribution device according to claim 10.

In order to prevent the personnel working on the device from accidentally touching the conducting laminae, the insulating profiled elements are higher than the conducting laminae.

In order to be able to arrange the electric power distribution device proximate to the pieces of equipment, the conducting lamina flanked by the insulating profiled elements is operatively connected, on one side, to a supporting bar for the pieces of electrical equipment.

Advantageously, the conducting lamina is constituted by two metal sheets which are shaped and assembled to each other.

In order to provide the contact channels of the conducting laminae, corrugated portions are provided along the longitudinal edges of the metal sheets and the sheets are assembled to each other so that the corrugated portions are mutually opposite.

In order to provide, with the metal plate that delimits the contact channels, elastic arms for clamping the end of the conductor, so as to ensure safe electrical contact, the shaped edges of the metal sheets have transverse notches.

When a plurality of conducting laminae are assembled, in order to provide electrical insulation between the laminae and outside the laminae, insulating profiled elements are provided, which are intermediate between the conducting laminae, as well as end insulating profiled elements outside the conducting laminae.

In order to mutually space the conducting laminae and provide a compartment that accommodates the corrugated portion of the metal sheets forming the contact channels, the intermediate insulating profiled elements have a central profile which is delimited by centering and spacing side walls for the conducting laminae and dividing walls protrude from the longitudinal edges of the central profile, delimiting a compartment for accommodating and separating the contact channels.

In order to partially close the slot for access to the contact channel and to provide an abutment surface for the insulating protection of the conductor that is connected to the pieces of electrical equipment, transverse expansions or edges are provided at the free end of the walls of the profiled elements.

In order to fix the device to a metal bar for supporting and coupling the pieces of electrical equipment, the insulating profiled element has longitudinal ribs which provide a supporting wall and a fixed seat for a rail of the bar for supporting and coupling the pieces of electrical equipment and an elastic seat for accommodating, with a snap action, a second rail of the supporting bar.

In order to contain the transverse thickness of the device, the pieces of equipment are directly connected to the end insulating profiled element. The end insulating profiled element has, on the side directed towards the pieces of electrical equipment, longitudinal ribs for the snap coupling of the pieces of electrical equipment.

In order to support the distribution device, for example in an electrical panel, the bar supporting the conducting laminae and the insulating profiled elements is connected, through its ends, to uprights of an electrical panel.

The insulating profiled elements are preferably constituted by drawn elements made of synthetic material.

In order to fix the laterally adjacent conducting laminae of the insulating profiled elements to each other, the insulating profiled elements are assembled to the conducting laminae by means of rivets made of insulating material.

In order to contain the bulk of the device, for example in a distribution board, the conducting laminae assembled to the insulating profiled elements are fixed to the rear wall of a box-like element by rivets made of insulating material.

In order to provide a modular connection of the piece of electrical equipment to the distribution device, conductors or U-shaped bars electrically connect the pieces of electrical equipment to the conducting laminae.

In order to connect the pieces of electrical equipment to the conducting laminae having different polarity which are arranged mutually side by side, the width of the bar corresponds to the distance between the contact channel of the conducting lamina and the electrical connection seat of the piece of equipment.

In order to safely handle the bar, an insulating film covers the electrical connection bar, leaving the contact ends exposed.

In order to identify the polarities of the conducting laminae to which the pieces of electrical equipment are connected, the insulating film of the electrical connection bar has different colors according to the width of the bar.

The main advantage of the invention is that the pieces of electrical equipment can be connected electrically to the conducting laminae from any chosen position for their connection to the supporting bars. Replacement of a piece of electrical equipment with others having a different bulk is particularly simple, since it entails only a possible lateral sliding of the other pieces of electrical equipment along the supporting bar.

A considerable advantage is also constituted by the fact that any number of conducting laminae can be arranged side by side, allowing to provide a distribution device of the unipolar or multipolar type, thus allowing to connect, on the same supporting bar, both unipolar and multipolar pieces of equipment as well as pieces of equipment for different voltages.

The possibility to electrically connect the pieces of equipment to the conducting laminae equally from the upper side or from the lower side is particularly convenient.

Another advantage is that the transverse bulk of the distribution device is particularly modest, allowing easier installation of distribution boards.

The device provided according to the present invention is also particularly safe for operators. The insulating profiled elements in fact provide excellent segregation of the conducting laminae and in the connecting bars the contact ends, which are not covered by the insulating film, are fully inserted in the contact channels or in the connection seats of the pieces of electrical equipment.

Finally, an important advantage is constituted by the constructive simplicity of the invention.

Further characteristics and advantages of the device according to the present invention will become apparent from the following detailed description of an embodiment thereof, given only by way of non-limitative example in the accompanying drawings, wherein:
Figure 1 is a perspective view of a first embodiment of the invention;
Figure 2 is a perspective view of a second embodiment of the invention;
Figure 3 is a schematic sectional side view of a device installed in a box-like element according to the present invention; and
Figure 4 is a sectional top view of the device of Figure 3.

With reference to the above figures, the distribution device is of the bipolar type. Advantageously, the device can be provided equally as a unipolar or as a multipolar type simply by arranging mutually side by side the chosen number of conducting laminae coupled to the insulating profiled elements.

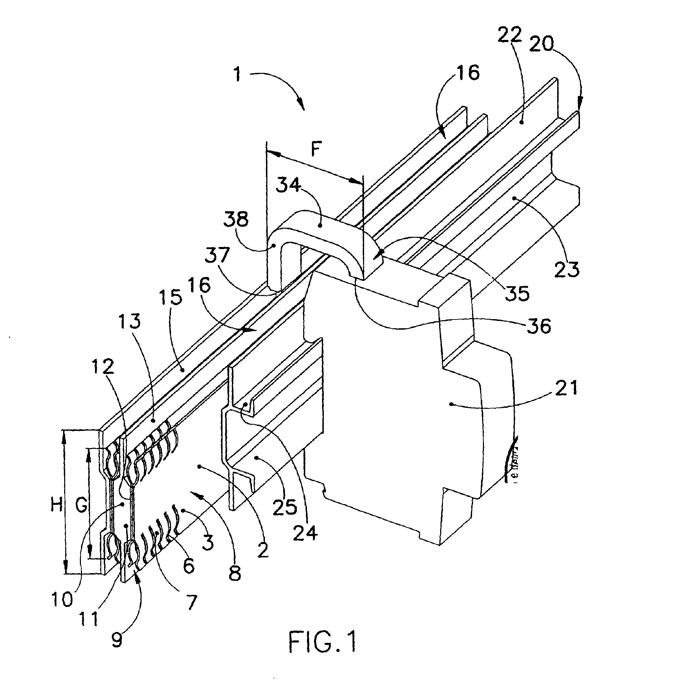

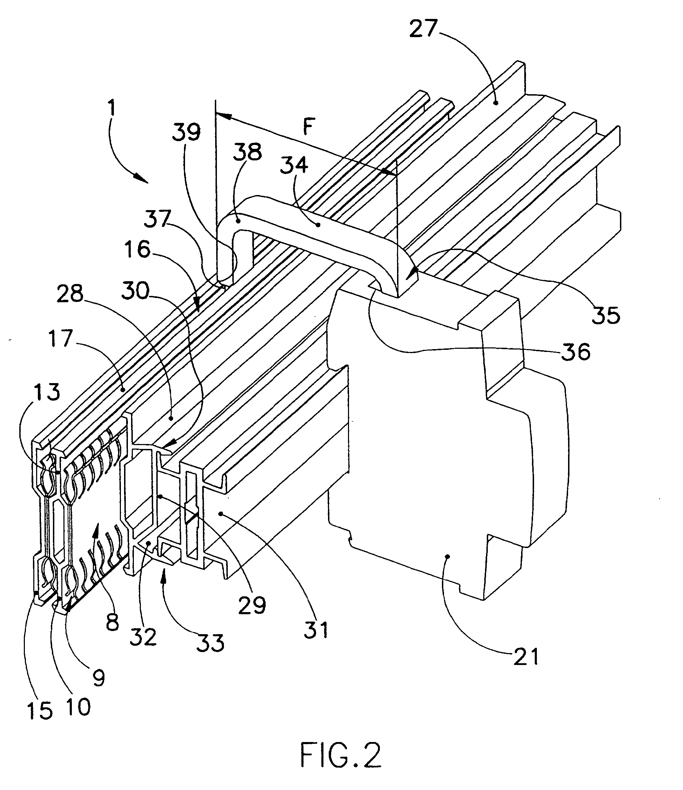

Figures 1 and 2 show the main components that constitute the distribution device according to the invention, generally designated by the reference numeral 1.

Metal sheets 2 shaped like a lamina or band have, along their longitudinal edges, a corrugation 3.

The metal sheets 2 have notches 6 which are arranged transversely to the corrugation 3. The notches transversely divide the corrugation 3 into a plurality of parallel elastic arms 7.

Advantageously, the metal sheets 2 are made of aluminum or preferably copper.

The sheets 2 are arranged laterally adjacent and mutually opposite in pairs, so that the concave part of the corrugation 3 forms, along the longitudinal edge, a contact channel which is generally designated by the reference numeral 9.

The pair of laterally adjacent metal sheets 2 forms a conducting lamina, generally designated by the reference numeral 8.

The mutually opposite orientation of the corrugation 3 forms a narrower portion and a guiding element which is directed towards the open end of the contact channel 9.

Two conducting laminae 8 are arranged side by side.

Intermediate insulating profiled elements 10 made of insulating material are interposed between the conducting laminae 8.

The insulating profiled elements 10 have a profile which is symmetrical with respect to an intermediate vertical plane.

A central expanded profile 11 has flat and parallel lateral surfaces 12 for the support, centering and spacing of the adjacent laminae 8.

Flat walls 13 protrude from the longitudinal edges of the central profile 11.

The lateral walls 13 are thinner than the central profile 11 and freely accommodate the corrugation 3 of the metal sheets 2.

Advantageously, the central profile 11 is internally provided with a longitudinal hollow chamber.

The laterally adjacent conducting laminae 8 are externally provided with end profiled elements 15.

The transverse cross-section of the end profiled element 15 has a constant thickness and a profile, on the side directed towards the contact lamina 8, which is symmetrical to the profile of the intermediate profiled element 10.

The insulating profiled elements 10, 15 surround the conducting laminae 8 like half-shells.

The walls 13 of the contiguous profiled elements form slots 16 for accessing the contact channels 9.

Advantageously, at the free ends of the insulating profiled elements 10, 15 transverse edges 17 are provided for partially closing the slots 16 (Figure 2).

Preferably, the edges 17 have a trapezoidal transverse cross-section with an oblique guiding and support surface which are arranged laterally to the slots 16.

The profiled elements 10, 15 have a height H which is greater than the height G of the conducting laminae 8.

Advantageously, the profiled elements 10, 15 are provided as drawn elements made of synthetic material.

One of the end profiled elements 15 has, on the opposite side with respect to the conducting laminae 8, grip and support means 20 for pieces of electrical equipment 21.

In a first embodiment (Figure 1), the surface 22 that lies opposite the conducting laminae 8 of an end profiled grip element 23 has longitudinal ribs 24, 25. The ribs 24, 25 form supporting rails for the pieces of electrical equipment 21.

The geometry and the dimensions of the ribs 24, 25 are of a conventional type for supporting pieces of electrical equipment 21, such as for example line protection breakers.

In a second embodiment (Figure 2), the end profiled grip element 27 has a longitudinal rib 28 which provides, together with a reinforcement rib 29, a supporting surface and a first seat 30 for a conventional metal bar 31 for supporting pieces of electrical equipment 21.

An additional rib 32 lying longitudinally to the profiled grip element 27 has, at its end, a second seat 33 for fixing the supporting bar 31. The rib 32 is flexible in order to accommodate the bar 31 with a snap action in the seat 33.

A U-shaped conducting bar 34 electrically connects the piece of electrical equipment 21 to a conducting lamina 8.

A first end 35 is accommodated in a per se known electrical connection seat 36 of a piece of equipment 21. The second end 37 is inserted, by forcing the elastic arms 7, in the contact channel 9 of a conducting lamina 8.

The bar 34 is covered by an insulating film 38 except for the ends 35, 37.

Advantageously, the film 38 forms, proximate to the end 37 for coupling to the contact channels 9, an abutment 39 for resting the bar 34 against the transverse edges 17 of the profiled elements 10 and 15.

The bars 34 have a width F which is variable as a function of the position of the conducting lamina 8 which is to be connected to the piece of electrical equipment 21.

Preferably, the insulating film 38 has different colors according to the width F of the bar 34. The colors that can be used for the insulating film 38 can be, for example, the colors used in the field for the various electrical phases.

The conducting laminae 8 assembled to the insulating profiled elements 10, 15, 23, 27 are mutually fixed by pressing, for example by means of rivets made of insulating material (not shown).

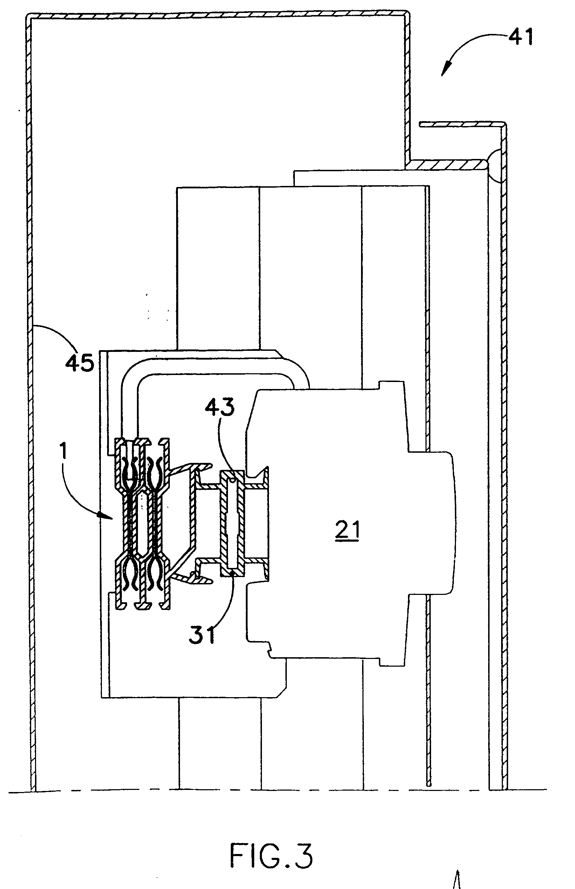

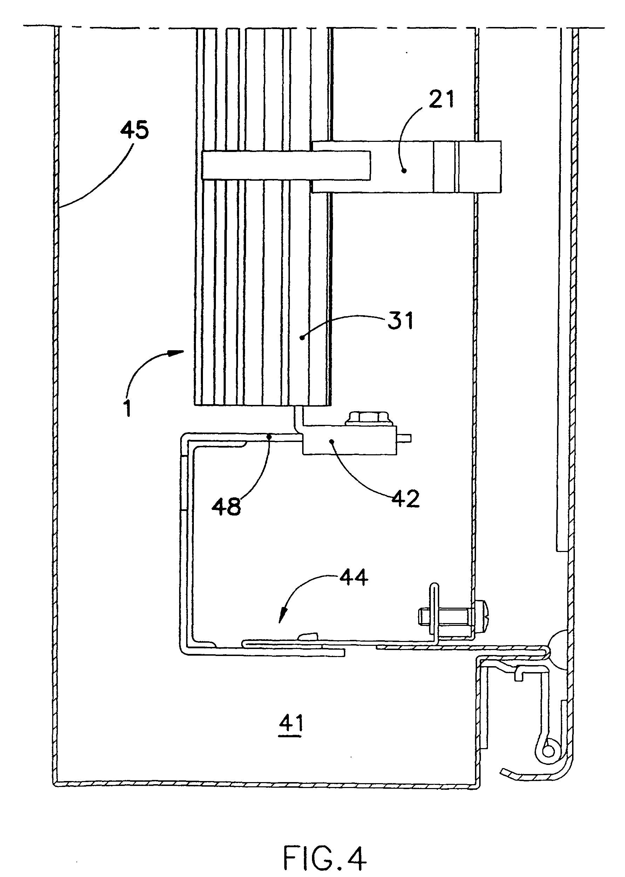

Figures 3 and 4 show one of the possible methods for fixing the distribution device 1 to a box-like element, generally designated by the reference numeral 41, for example for a distribution board.

The bar 31, which supports the pieces of electrical equipment 21 and the distribution device 1, is fixed, by means of an angle element 42 inserted in a through hole 43 of the bar 31, to a component of a supporting structure 44. For example, the angle element 42 is fixed to an upright 48.

Advantageously, the conducting laminae 8, assembled to the insulating profiled elements 10, 15, 23 and 27, are fixed directly to the rear wall 45 of the box-like element 41 by means of insulating rivets.

Operation of the distribution device 1 is described hereinafter.

A description is given, by way of example, of the connection of a conducting lamina 8 to one of the phases of the electrical power supply system, and of how pieces of electrical equipment 21 of branched lines are supplied by the lamina 8 (Figure 3).

A conducting wire arriving from an electrical phase, for example of a contactor, is connected at one end to the upper input of a master switch (all of which are not shown).

A bar connects, in a downward region, the master switch to one of the conducting laminae 8 chosen for the same electrical phase.

A plurality of pieces of electrical equipment 21, such as for example protection breakers for a plurality of branched lines, is fixed to the same supporting bar 31 and is arranged freely longitudinally.

Bars 34 are simultaneously inserted in an upward region in the contact channel 9 of the conducting lamina 8, which is supplied by the master switch, and in the seat 36 for the electrical connection of the piece of equipment 21.

Conducting wires (not shown) are connected to the lower electrical connection seats of the pieces of equipment 21 and carried to the input and output opening of the box-like element 41.

## Claims

1. An electric power distribution device (1), comprising a conducting lamina (8), to which pieces of equipment (21) can be electrically connected, said conducting lamina (8) having contact channels (9) along its longitudinal edges and being surrounded by half-shell shaped insulating profiled elements (10, 15, 23, 27), which leave slots (16) for accessing the contact channels (9) by means of surrounding the conducting lamina (8), conductors (34) being insertable into the contact channels (9) for connecting the pieces of electrical equipment (21) to the conducting lamina (8) **characterised in that** said conducting lamina (8) comprises two shaped metal sheets (2), the longitudinal edges of which have corrugated portions (3), said metal sheets (2) being mutually assembled, so that the corrugated portions (3) are mutually opposite and extend outwardly and away from the contact plane of the metal sheets (2) according to opposite directions.

2. A device (1), according to claim 1, **characterized in that** the insulating profiled elements (10, 15, 23, 27) have a height (H), which is greater than the height (G) of the conducting lamina (8).

3. A device (1), according to one or more of the preceding claims, **characterized in that** it comprises a supporting bar (31), which accommodates the pieces of electrical equipment (21), the conducting lamina (8) and the insulating profiled elements (10, 15, 27) being operatively connected to said supporting bar (31).

4. A device (1), according to one or more of the preceding claims, **characterized in that** the longitudinal edges of the metal sheets (2) have transverse notches (6).

5. A device (1), according to claim 1, **characterized in that** intermediate insulating profiled elements (10) are provided between a plurality of conducting laminae (8), end- insulating profiled elements (15) being provided outside said conducting laminae (8).

6. A device (1), according to claim 5, **characterized in that** said intermediate profiled elements (10) have a central profile (11) which is delimited by lateral centering and spacing walls (12) for the conducting laminae (8), dividing walls (13) protruding from the central profile (11).

7. A device (1) according to one or more of the preceding claims, **characterized in that** the insulating profiled elements (10, 15, 23, 27) have, at their free ends, expansions (17), which partially cover the slots (16).

8. A device (1), according to one or more of the preceding claims, **characterized in that** the insulating profiled elements (27) have, on the side directed towards the pieces of electrical equipment (21), ribs (28, 29, 32), which delimit seats (30, 33) for the snap coupling of the pieces of electrical equipment (21) and/or the snap coupling of the supporting bar (31).

9. A device (1), according to one or more of the preceding claims, **characterized in that** the insulating profiled elements (10, 15, 23, 27) are constituted by drawn elements made of synthetic material.

10. A device (1), according to one or more of the preceding claims, **characterized in that** the insulating profiled elements (10, 15, 23, 27) are assembled to the conducting lamina (8) by rivets made of insulating material.

11. A device (1), according to claim 3, **characterized in that** said supporting bar (31) is connected, by means of its ends, to uprights (48) of an electrical panel.

12. A device (1) according to claim 1, **characterized in that** the conducting lamina (8), when assembled to the insulating profiled elements (10, 15, 23), is fixed to the wall (45) of a box-like element (41).

13. A device (1), according to one or more of the preceding claims, **characterized in that** said conductors (34) comprises U-shaped conductors.

14. A device (1), according to claim 13, **characterized in that** the width (F) of said U-shaped conductors (34) corresponds to the distance between said contact channel (9) and an electrical connection seat (36) of the piece of equipment (21).

15. A device (1), according to one or more of the claims from 13 to 14, **characterized in that** an insulating film (38) covers said U-shaped conductors (34), with exception of the contact ends (35, 37) of said U-shaped conductors (34).

## Patentansprüche

1. Elektrische Leistungsversorgungsvorrichtung (1) aufweisend ein Leitungsblech (8) mit welchem Teile der Ausstattung (21) elektrisch verbunden werden können, wobei das Leitungsblech (8) Kontaktkanäle (9) entlang seiner Längskanten aufweist und von halbschalenförmig geformten isolierenden Profilelementen (10, 15, 23, 27) umgeben wird, welche Schlitze (16) zum Zugänglich machen der Kontaktkanäle (9) mittels Umfassen des Leitungsblechs (8) freilässt, Leiter (34), die zum Verbinden der Teile der elektrischen Ausstattung (21) mit dem Leitungsblech (8) in die Kontaktkanäle (9) einfügbar sind, **gekennzeichnet dadurch, dass** das Leitungsblech (8) zwei geformte Metallbleche (2) aufweist, deren Längskanten gewölbte Abschnitte (3) aufweisen, wobei die Metallbleche (2) miteinander so zusammengebaut werden, dass die gewölbten Abschnitte (3) einander gegenüber liegen und sich in entgegengesetzten Richtungen nach außen, weg von der Kontaktebene der Metallplatten (2) erstrecken.

2. Vorrichtung (1) gemäß Anspruch 1, **dadurch gekennzeichnet, dass** die isolierenden Profilelemente (10, 15, 23, 27) eine Höhe (H) aufweisen, die größer ist als die Höhe (G) des Leitungsblechs (8).

3. Vorrichtung (1) gemäß einem oder mehreren der vorhergehenden Ansprüche, **dadurch gekennzeichnet, dass** sie eine Halterungsschiene (31) aufweist, welche die Teile der elektrischen Ausstattung (21) aufnimmt, wobei das Leitungsblech (8) und die isolierenden Profilelemente (10, 15, 27) betrieblich mit der Halterungsschiene (31) verbindbar sind.

4. Vorrichtung (1) gemäß einem oder mehreren der vorhergehenden Ansprüche, **dadurch gekennzeichnet, dass** die Längskanten der Metallbleche (2) quer dazu verlaufende Kerben (6) aufweisen.

5. Vorrichtung (1) gemäß Anspruch 1, **dadurch gekennzeichnet, dass** endisolierende zwischenisolierende Profilelemente (10) zwischen einer Vielzahl von Leitungsblechen (8) vorgesehen sind, wobei endisolierende Profilelemente (15) an der Außenseite des Leitungsblechs (8) vorgesehen sind.

6. Vorrichtung (1) gemäß Anspruch 5, **dadurch gekennzeichnet, dass** die Zwischenprofilelemente (10) ein Zentralprofil (11) aufweisen, welches durch seitliche Zentrierungs- und Abstandswände (12) für die Leitungsbleche (8) abgegrenzt sind, wobei Teilungswände (13) aus dem Zentralprofil (11) hervorragen.

7. Vorrichtung (1) gemäß einem oder mehreren der vorhergehenden Ansprüche, **dadurch gekennzeichnet, dass** die isolierenden Profilelemente (10, 15, 23, 27) an ihren freien Enden Erweiterungen (17) aufweisen, welche teilweise die Schlitze (16) bedecken.

8. Vorrichtung (1) gemäß einem oder mehreren der vorhergehenden Ansprüche, **dadurch gekennzeichnet, dass** die isolierenden Profilelemente (27) auf der Seite, die zu den Teilen der elektrischen Ausstattung (21) gerichtet sind, Rippen (28, 29, 32) aufweisen, welche die Sitze (30, 31) für die Schnappkopplung der Teile der elektrischen Ausstattung (21) und/oder der Schnappkopplung der Halterungsschiene (31) abgrenzen.

9. Vorrichtung (1) gemäß einem oder mehreren der vorhergehenden Ansprüche, **dadurch gekennzeichnet, dass** die isolierenden Profilelemente (10, 15, 23, 27) durch gezogene Elemente aus synthetischem Material gebildet werden.

10. Vorrichtung (1) gemäß einem oder mehreren der vorhergehenden Ansprüche, **dadurch gekennzeichnet, dass** die isolierenden Profilelemente (10, 15, 23, 27) mittels Nieten aus isolierendem Material mit dem Leitungsblech (8) zusammengebaut sind.

11. Vorrichtung (1) gemäß Anspruch 3, **dadurch gekennzeichnet, dass** die Halterungsschiene (31) mit seinen Enden an den Stützen (48) eines elektrischen Paneels verbunden ist.

12. Vorrichtung (1) gemäß Anspruch 1, **dadurch gekennzeichnet, dass** das Leitungsblech (8), wenn es mit den isolierenden Profilelementen (10, 15, 23) zusammengebaut ist, an der Wand (45) eines kastenartigen Elements (41) befestigt ist.

13. Vorrichtung (1) gemäß einem oder mehreren der vorhergehenden Ansprüche, **dadurch gekennzeichnet, dass** die Leiter (34) U-förmige Leiter aufweisen.

14. Vorrichtung (1) gemäß Anspruch 13, **dadurch gekennzeichnet, dass** die Breite (F) der U-förmigen Leiter (34) dem Abstand zwischen den Kontaktkanal (9) und einem elektrischen Verbindungssitz (36) des Teils der Ausstattung (21) entspricht.

15. Vorrichtung (1) gemäß einem oder mehreren der Ansprüche 13 bis 14, **dadurch gekennzeichnet, dass** eine Isolationsschicht (38) die U-förmigen Leiter (34) mit Ausnahme der Kontaktenden (35, 37) der U-förmigen Leiter (34) bedeckt.

## Revendications

1. Dispositif de distribution d'énergie électrique (1), comprenant une lame conductrice (8), auquel des équipements (21) peuvent être électriquement connectés, ladite lame conductrice (8) ayant des canaux de contact (9) le long de ses bords longitudinaux et étant entourée d'éléments profilés isolants en forme de demies coquille (10, 15, 23, 27) qui laissent des fentes (16) pour accéder aux canaux de contact (9) en entourant la lame conductrice (8), les conducteurs (34) pouvant être introduits dans les canaux de contact (9) pour connecter les équipements électriques (21) à la lame conductrice (8), **caractérisé en ce que** ladite lame conductrice (8) comprend deux feuilles métalliques formées (2) dont les bords longitudinaux ont des parties ondulées (3), lesdites feuilles métalliques (2) étant mutuellement fixées de telle façon que les parties ondulées (3) sont mutuellement opposées et s'étendent vers l'extérieur et à distance de la plage de contact des feuilles métalliques (2) dans des directions opposées.

2. Dispositif (1) selon la revendication 1, **caractérisé en ce que** les éléments profilés isolants (10, 15, 23, 27) ont une hauteur (H) qui est supérieure à la hauteur (G) de la lame conductrice (8).

3. Dispositif (1) selon l'une quelconque des revendications précédentes, **caractérisé en ce qu'**il comprend une barre support (31) qui contient les équipements électriques (21), la lame conductrice (8) et les éléments profilés isolants (10, 15, 27) étant connectés de manière opérationnelle à ladite barre support (31).

4. Dispositif (1) selon l'une quelconque des revendications précédentes, **caractérisé en ce que** les bords longitudinaux des feuilles métalliques (2) possèdent des encoches transversales (6).

5. Dispositif (1) selon la revendication 1, **caractérisé en ce que**, des éléments profilés isolants intermédiaires (10) sont prévus entre une pluralité de lames conductrices (8), des éléments profilés isolants terminaux (15) étant prévus à l'extérieur desdites lames conductrices (8).

6. Dispositif (1) selon la revendication 5, **caractérisé en ce que** lesdits éléments profilés intermédiaires (10) ont un profil central (11) qui est délimité par des parois latérales de centrage et d'espacement (12) pour les lames conductrices (8), des parois de division (13) dépassant du profil central (11).

7. Dispositif (1) selon l'une quelconque des revendications précédentes, **caractérisé en ce que** les éléments profilés isolants (10, 15, 23, 27) possèdent au niveau de leurs extrémité libres des prolongements (17) qui recouvrent partiellement les fentes (16).

8. Dispositif (1) selon l'une quelconque des revendications précédentes, **caractérisé en ce que** les éléments profilés isolants (27) possèdent sur le côté dirigé vers les équipements électriques (21) des nervures (28, 29, 32) qui délimitent des logements (30, 33) pour le raccordement encliqueté des équipements électriques (21) et/ou le raccordement encliqueté de la barre support (31).

9. Dispositif (1) selon l'une quelconque des revendications précédentes, **caractérisé en ce que** les éléments profilés isolants (10, 15, 23, 27) sont constitués d'éléments étirés en matériau synthétique.

10. Dispositif (1) selon l'une quelconque des revendications précédentes, **caractérisé en ce que** les éléments profilés isolants (10, 15, 23, 27) sont fixés à la lame conductrice (8) par des rivets en matériau isolant.

11. Dispositif (1) selon la revendication 3, **caractérisé en ce que** ladite barre support (31) est connectée par le biais de ses extrémités à des montants (48) d'un tableau électrique.

12. Dispositif (1) selon la revendication 1, **caractérisé en ce que** la lame conductrice (8), lorsqu'elle est fixée aux éléments profilés isolants (10, 15, 23), est fixée à la paroi (45) d'un élément de type boîtier (41).

13. Dispositif (1) selon l'une quelconque des revendications précédentes, **caractérisé en ce que** lesdits conducteurs (34) comprennent des conducteurs en forme de U.

14. Dispositif (1) selon la revendication 13, **caractérisé en ce que** la largeur (F) desdits conducteurs en forme de U (34) correspond à la distance entre ledit canal de contact (9) et un logement de connexion électrique (36) de l'équipement (21).

15. Dispositif (1) selon l'une quelconque des revendications 13 à 14, **caractérisé en ce qu'**un film isolant (38) recouvre lesdits conducteurs en forme de U (34), à l'exception des extrémités de contact (35, 37) desdits conducteurs en forme de U (34).
